# EUROPÄISCHE PATENTSCHRIFT

(11) **EP 2 768 043 B1**
(45) Veröffentlichungstag und Bekanntmachung des Hinweises auf die Patenterteilung: **28.03.2018**
(21) Anmeldenummer: 14168671.7
(22) Anmeldetag: 21.06.2011
(51) Int. Cl.: H01M 2/02, H01M 2/10, H01M 2/26, H01M 10/39, H01M 10/42, H01M 10/058, H01M 8/18, H01M 10/0562, H01M 10/654, H01M 10/04

(54) **Verbesserte technische Vorrichtung zum großtechnischen Speichern von elektrischer Energie**
Improved technical apparatus for the large-scale storage of electrical energy
Dispositif technique amélioré permettant le stockage industriel d'énergie électrique

(30) Priorität: 22.06.2010 EP 10166807
(43) Veröffentlichungstag der Anmeldung: 20.08.2014
(62) Teilanmeldung aus: 11726425.9
(73) Patentinhaber: BASF SE, 67056 Ludwigshafen am Rhein (DE)
(72) Erfinder: Übler, Christoph, 67308 Lautersheim (DE); Bender, Dietmar, 67459 Böhl-Iggelheim (DE); Huber, Günther, 67071 Ludwigshafen (DE); Fischer, Andreas, 64646 Heppenheim (DE); Schube, Bernd, 67112 Mutterstadt (DE); Atherton, Glyn, Widnes, WA 9 9QY (GB); Stackpool, Francis, Runcorn, Cheshire WA7 4JQ (GB); Dustmann, Cord-Heinrich, 6839 Sagno (CH)
(74) Vertreter: BASF IP Association

(56) Entgegenhaltungen:
- GB-A- 1 548 263
- JP-A- 63 202 865
- JP-A- 2000 251 931
- JP-A- 2001 118 598
- US-A- 3 915 741
- US-A- 4 037 027
- US-A- 4 230 780
- US-A- 4 510 681
- US-A- 4 576 881

## Beschreibung

Die Erfindung ist durch den Gegenstand der unabhängigen Ansprüche 1 und 9 definiert und betrifft eine verbesserte technische Vorrichtung zum großtechnischen Speichern von Energie und ein Verfahren zur Speicherung und zum Transport elektrischer Energie mittels dieser Vorrichtung.

Die Erzeugung elektrischer Energie ist im Falle fossiler Kraftwerke mit der Erzeugung von CO₂ verbunden und hat damit erheblichen Einfluss auf den Treibhauseffekt. Energieerzeugung auf Basis regenerativer Energieträger, z. B. Wind, Solar, Geothermie oder Wasserkraft vermeidet diesen Nachteil. Diese regenerativen Energieträger sind zeitlich jedoch nicht beliebig lastganggerecht verfügbar. Außerdem differiert ggf. der Standort der Energieerzeugung vom Ort des Energiebedarfs. Um diesen systembedingten Nachteil zu kompensieren ist eine Speicherung, Pufferung und ggf. auch ein Transport der erzeugten Energie erforderlich.

Die Energie aus erneuerbaren Quellen, wie Windrädern, Solaranlagen fällt nicht kontinuierlich an. Bedarf und Verfügbarkeit stehen nicht im Einklang. Ein ausschließlich auf erneuerbaren Energien basierendes und dennoch stabiles Stromnetz kann es unter diesen Rahmenbedingungen nicht geben. Es besteht der Bedarf diese Schwankungen durch kostengünstige und energieeffiziente Systeme mit einem hohen Wirkungsgrad auszugleichen und zu puffern.

In vielen dünn besiedelten Regionen der Erde, z. B. Sahara, Island oder "off-shore" besteht das Potential, aufgrund der geographischen, klimatischen bzw. geologischen Rahmenbedingungen überaus effizient aus Wind, Sonne bzw. geothermischer Wärme elektrischen Strom via Windkraft, Solaranlagen bzw. geothermischen Kraftwerk zu erzeugen. Heute mangelt es jedoch an technischen Verfahren, diese Energie in Regionen mit hohem Verbrauch zu transportieren. Traditionelle Leitungssysteme sind durch Netzverluste und Kosten des Netzausbaus limitiert. Die Wasserstofftechnologie, bei der vor Ort erzeugte elektrische Energie in Wasserstoff umgewandelt und anschließend in einer Brennstoffzelle in Strom umgewandelt wird, ist mit einem Gesamtwirkungsgrad von rund 20 % unattraktiv, da Transport und Verflüssigung des Wasserstoffs einen Großteil der Energie verbrauchen.

Die Speicherung großer Mengen elektrischer Energie stellt genauso wie der Transport elektrischer Energie über große Distanzen ein bis heute nur unbefriedend gelöstes Problem dar. Zur Speicherung elektrischer Energien werden derzeit im technischen Maßstab Pumpspeicherkraftwerke verwendet, in denen die potentielle Energie der geodätischen Höhendifferenz des Wassers zur Umwandlung in Strom genutzt wird. Der Aufbau solcher Pumpspeicherkraftwerke ist durch landschaftliche und ökologische Rahmenbedingungen jedoch limitiert. Druckspeicherkraftwerke, in denen die Kompression von Luft zu Energiespeicherung genutzt wird, sind aufgrund ihres vergleichsweise geringen Wirkungsgrades limitiert. Auch andere Formen der Energiespeicherungen wie Superkondensator oder das Schwungrad adressieren andere Zielmärkte (Kurzzeitspeicher). Am nächsten kommen diesem Anspruch Batterien, welche in verschiedenen Konzepten technisch realisiert wurden.

Aus der DE-A-2635900 ist eine Batterie bekannt, die mindestens ein geschmolzenes Alkalimetall als Anode und einen kathodischen Reaktionsteilnehmer, welcher elektrochemisch umkehrbar mit dem anodischen Reaktionsteilnehmer reaktionsfähig ist, enthält. Der kathodische Reaktionsteilnehmer besteht aus geschmolzenen Polysulfidsalzen oder einer zweiphasigen Masse aus geschmolzenem Schwefel und mit geschmolzenem Schwefel gesättigten Polysulfidsalzen. Diese Batterie weist weiterhin Kationendurchlässige Sperrschichten für den Massentransport zwischen der anodischen und der kathodischen Reaktionszone auf.

Aus der DE-A-2610222 ist eine aus mehreren Schwefel-Natrium-Zellen bestehende Batterie bekannt, wobei jede Zelle 1) ein kathodisches Abteil mit einem bei Betriebstemperatur flüssigen kathodischen Reaktionsstoff 2) aus Schwefel, Phosphor oder Selen oder alkalischen Salzen dieser Elemente, mindestens ein Feststoffelektrolytrohr, das bei der Betriebstemperatur flüssigen anodischen Reaktionsstoff aus einem Alkalimetall, insbesondere Natrium aufweist, sowie einen anodischen Behälter 3), der eine Reserve des anodischen Reaktionsstoffs enthält.

Aus der EP-A-116690 ist bekannt, mehrere Natriumschwefelbatterien als Module für ein Energiespeichersystem zusammenzuschalten.

All diesen Batterien ist gemeinsam, dass sie als geschlossene Systeme in ihrer Energiespeicherung durch die Menge der in Batterie enthaltenen Reaktanden (Redoxpartner) begrenzt sind. Diese Begrenzung wurde durch die Flow Batterie behoben. Basis dieses Batteriekonzepts sind flüssige, aus Lösungsmittel und Metallsalz bestehende Elektrolyten. Das begrenzte Vorratsvolumen der klassischen Batterie wird durch zweite Vorratsbehälter mit den Reaktanden vergrößert.

Aus der DE-A-2927868 ist eine Flow Batterie zur Speicherung und Freisetzung von elektrischer Energie in einer elektrochemischen Zelle mit einem Anoden- und einem Kathodenabteil bekannt, die durch eine semipermeable Ionenaustauschermembran voneinander getrennt sind, wobei man das Anodenabteil mit einer so genannten Anolytlösung, einer oxidierbaren Verbindung, die im Wesentlichen in der Anolytlösung gelöst bleibt und aus ihrer oxidierten Form wieder reduziert werden kann, beschickt, die oxidierte Anolytlösung aus dem Anolytabteil entfernt und die oxidierte Anolytlösung speichert. Gleichzeitig beschickt man das Katholytabteil mit einer Katholytlösung, einer reduzierbaren Verbindung, die im Wesentlichen in dem Katholytlösungsmittel gelöst bleibt und aus ihrer reduzierten Form wieder oxidiert werden kann. Die Anolyt- und die Katholytlösung können in zwei sich entsprechenden Behältern aufbewahrt und mit Umwälzpumpen durch das Anoden- und Kathodenabteil zirkuliert werden. Die Katholytlösung kann beispielsweise sechswertiges Chrom und die Anolytlösung zweiwertiges Chrom enthalten.

Aus der DE-A-1771148 und der US-A-3533848 ist ein System zur Gewinnung elektrischer Energie durch elektrochemische Kombination von Natrium und Schwefel bekannt, dadurch gekennzeichnet, dass es ein für Natriumionen durchgängiges Diaphragma mit benachbarten Räumen für Natrium und Schwefel, einen Behälter zur Lagerung des Natriums außerhalb der Zelle, Leitungen zur Beförderung des Natriums vom Lagerbehälter zur Brennstoffzelle, einen Behälter zur Lagerung des Schwefels außerhalb der Zellen und Leitungen zur Beförderung des Schwefels vom Lagerbehälter zur Zelle aufweist. Die Zellen können beispielsweise elektrisch in Serie geschaltet sein.

Aus der JP-A-2001118598 ist es bekannt, Natriumschwefelbatterien mit zwei oder mehr Zylindern in Matrixform für geschmolzenes Natrium oder geschmolzenen Schwefel zu betreiben.

Aus der JP-A-2002184456 ist bekannt, eine Natriumschwefelbatterie mit einem externen Lagertank für Schwefel zu betreiben, welcher mit der Batterie fest verbunden ist.

Natriumschwefelbatterien, bei denen ein Behälter für Natrium und ein Behälter für Schwefel übereinander angeordnet sind, sind des Weiteren auch aus US 4,510,681 oder US 3,915,741 bekannt.

Bei den bekannten Natriumschwefelbatterien und ihren Ausführungen als Flow-Batterie erfolgt die Einspeisung der in den Edukten Natrium und Schwefel gespeicherten Energiemenge und die Entladung durch Umsetzung von Natrium und Schwefel unter Bildung von Natriumsulfid bzw. Natriumpolysulfiden zeitlich und örtlich gekoppelt.

Der Erfindung lag die Aufgabe zugrunde, eine verbesserte Vorrichtung und ein verbessertes Verfahren für ein elektrochemisches Kraftwerk zur Verfügung zu stellen auf Basis von Redoxpartnern, insbesondere Alkali, speziell Natrium und beispielsweise Schwefel.

Die Erfindung betrifft eine Vorrichtung zur Speicherung elektrischer Energie mittels der Stoffe A und S, die ein Redoxpaar bilden und voneinander getrennt vorliegen, wobei
a) die Vorrichtung die Stoffe A und S enthält
b) die Stoffe A und S getrennt voneinander jeweils in einem Behälter BA und BS enthalten sind, welche übereinander angeordnet sind,
c) wobei die Behälter BA und BS mittels eines Festelektrolyten E verbunden sind, der für Kationen durchlässig ist,
d) wobei die Behälter BA und BS in einem Überbehälter enthalten sind, wobei die Vorrichtung wenigstens zwei Überbehälter enthaltend Behälter BA und BS verbunden mittels eines Festelektrolyten E enthält,
wobei das Alkalimetall als Schmelze vorliegt und im Inneren von mindestens einem, unten geschlossenen und aus dem Elektrolyten E gebildeten Keramikrohr gehalten wird, und das Innere jedes Keramikrohres jeweils über ein Steigrohr mit dem darüber leigenden Inhalt des Alkalimetallbehälters kommuniziert, wobei das Steigrohr von oben in das Alkalimetall im Behälter BA eintaucht.

Erfindungsgemäß ist der Stoff A ein Alkalimetall, insbesondere Natrium, und der Stoff S Schwefel.

Die mittels des Elektrolyten E verbundenen Behälter BA und BS stellen eine Zelle dar; in einer bevorzugten Ausführungsform liegt diese Zelle als Fass (im Folgenden Fasszelle) vor.

Die Erfindung betrifft weiterhin ein Verfahren zur Speicherung und zur Abgabe, gegebenenfalls zum Transport elektrischer Energie unter Verwendung eines elektrochemischen Reaktors, welches dadurch gekennzeichnet ist, dass eine erfindungsgemäße Vorrichtung benutzt wird mit einem Alkalimetall als Stoff A, insbesondere Natrium, und Schwefel als Stoff S.

Ein Verfahren zum Transport und zur Abgabe elektrochemischer Energie in einem elektrochemischen Kraftwerk umfasst, dass an einem Ort des Energiebedarfs
1.) jeweils wenigstens ein Vorratsbehälter BS mit hochreinem flüssigem Schwefel und ein Vorratsbehälter BA mit flüssigem hochreinem Alkalimetall bereitgestellt werden
2.) wenigstens eine elektrochemische Alkalimetall/Schwefelzelle bereitgestellt wird, wobei diese Zelle jeweils mindestens folgende Komponenten umfasst:
2.1 ein Anodenabteil A für die Aufnahme von flüssigem Alkalimetall
2.2 ein Kathodenabteil K für die Aufnahme von flüssigem Schwefel, wobei
2.3 die Abteile A und K durch einen festen Elektrolyten E getrennt sind, der bei der Betriebstemperatur der Zelle für durch Oxidation des Alkalimetalls gebildete Kationen durchlässig ist,
2.4 Elektroden für den Schluss eines äußeren Stromkreises für den durch die Umsetzung des Alkalimetalls mit dem Schwefel erzeugten elektrischen Strom
3.) Vorratsbehälter BA mit dem Anodenabteil A und Vorratsbehälter BS mit dem Kathodenabteil K verbunden werden unter Zufuhr von flüssigem Alkalimetall in das Anodenabteil A und flüssigem Schwefel in das Kathodenabteil K
4.) der äußere Stromkreis unter Oxidation des Alkalimetalls, Bildung von Alkalisulfiden im Kathodenabteil K und Stromfluss geschlossen wird,
5.) die im Kathodenabteil gebildeten Alkalisulfide abgezogen und in einem Vorratsbehälter BAS gesammelt werden,
6.) die im Vorratsbehälter BAS gesammelten Alkalisulfide zu einer zweiten elektrochemischen Zelle an einem Ort hoher Energieverfügbarkeit und Elektrolyse in der elektrochemischen Zelle unter Bildung von Schwefel und hochreinem Natrium transportiert werden,
7.) wenigstens einer der in Schritt 6 gewonnenen Komponenten Schwefel und Alkalimetall an einen Ort des Energiebedarfs transportiert und in ein als Stromerzeuger geschaltetes elektrochemisches Kraftwerk eingespeist wird, dadurch gekennzeichnet, dass eine erfindungsgemäße Vorrichtung verwendet wird.

### Redoxpartner

In der bevorzugten Ausführung wird das Redoxpotential von Natrium und Schwefel genutzt.

Im Folgenden wird, soweit nichts anderes ausdrücklich angegeben ist, insbesondere auf das Natrium-/Schwefelsystem Bezug genommen. Für die übrigen Systeme gelten diese Ausführungen analog bzw. in einer dem Fachmann auf Basis der vorliegenden Beschreibung der Erfindung geläufigen Form. Soweit Bezugszeichen angegeben sind, werden diese anhand spezieller Ausführungsformen in den beigefügten Figuren speziell und näher erläutert.

### Positive Elektrode

Die Schwefelelektrode stellt die Plusseite des Energiespeichers da. Dieser Pluspol wird von einem mit Schwefel/Natriumpolysulfid getränkten Kohlenstoffflächengebilde, insbesondere einem entsprechenden Filz oder Vlies gebildet. Die Kohlenstoffelektroden sind konzentrisch um die keramischen Elektrolytrohre angeordnet. Durch den Einbau einer nichtleitenden offen porösen Abstandsschicht, wird der direkte Kontakt der Kohlenstoffelektrode mit dem keramischen Elektrolyten verhindert. Damit wird vermieden, dass sich natriumfreier nicht leitender Schwefel auf die keramischen Elektrolyte legt und den Stromfluss limitiert. Die Kohlenstoffelektroden sind über ein System aus Stromableitern (15) mit der Stromsammelschiene am Boden der Fasszelle niederohmig elektrisch leitend verbunden.

In einer bevorzugten Ausführungsform wird der flüssige Schwefel im Kathodenabteil mit einem Leitzusatz versetzt. Bevorzugte Leitzusätze sind Selen, Tetracyanoethylen, Graphite und Ruß.

Die im Kathodenabteil gebildeten Alkalimetallsulfide können Alkalimetallsulfid und/oder die entsprechenden Polysulfide umfassen, insbesondere Polysulfide der Formel M₂Sₓ, worin x eine Zahl > 2 bedeutet, insbesondere Natriumpolysulfide Na₂Sₓ.

### Negative Elektrode

Als Material für die negative Elektrode werden erfindungsgemäß Alkalimetalle, insbesondere Natrium, verwendet.

### Elektrolyt

Der Elektrolyt besteht in einer bevorzugten Ausführungsform aus β-Aluminiumoxid oder β" Aluminiumoxid, welches vorzugsweise stabilisiert wird, vorzugsweise mit MgO oder Li₂O.

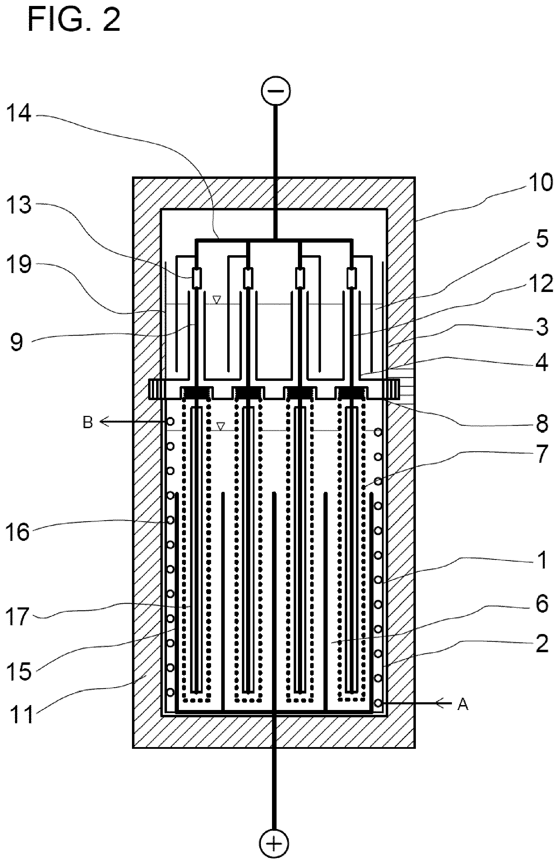

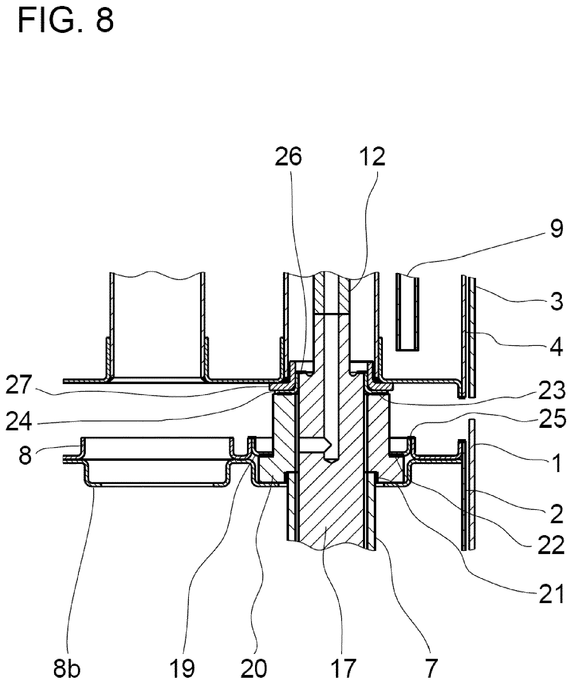

Als Elektrolyt werden in einer besonders bevorzugten Ausführungsform Keramiken verwendet. Als Material für die Keramiken kommen keramische Materialien wie NASICON® in Betracht, deren Zusammensetzung in der EP-A 0 553 400 angegeben ist. Eine besonders bevorzugte Keramik ist die auch als Keramik bezeichnete Keramik. Auch Natrium-Ionen leitende Gläser sind geeignet sowie Zeolithe und Feldspate. Bevorzugt sind jedoch Natrium-beta"-Aluminiumoxid, Natrium-beta-Aluminiumoxid, Natrium-beta/beta"-Aluminiumoxid. Die Natrium-Ionen leitenden Keramiken sind einseitig unten geschlossene, oben offene, bevorzugt dünnwandige Rohre (Figur 2, (7). Die Anzahl beträgt mindestens 1 maximal 200, in einer bevorzugten Ausführungsform 50 - 150. Bevorzugt kommen Keramikrohre mit einem Durchmesser von 20 bis 50 mm und einer Länge von vorzugsweise 0,5m bis 2m zum Einsatz. Die Wandstärke ist zwischen 0,5mm und 3mm, bevorzugt zwischen 1,5 mm und 2 mm. Die Natrium-Ionen leitenden Keramikrohre sind bevorzugt am Fassdeckel (Figur 2, 8) des unteren Fasses befestigt, so dass sie von oben in den Inhalt des Schwefelfasses hineinragen. Sie werden in elektrischer Parallelschaltung betrieben.

### Stromerzeugung

Bei der Stromerzeugung im Alkalimetallschwefel-Reaktor wird Alkalimetall im Anodenraum am Elektrolyten E oxidiert, wobei die gebildeten Alkalimetallkationen durch die semipermeable Wand des Elektrolyten E in das Kathodenabteil wandern und sich dort mit dem Schwefel zu Alkalisulfiden umsetzen.

### Verfahrensparameter

Die Betriebstemperatur der elektrochemischen Zelle beträgt vorzugsweise wenigstens 250 °C und liegt vorzugsweise in einem Bereich von 300 - 350 °C.

### Anordnung der Behälter BA und BS

In einer besonders bevorzugten Ausführungsform handelt es sich bei den Behältern BA und BS um Fässer, insbesondere in zylindrischer Form, insbesondere mit einem Fassungsvolumen von 10 bis 400, insbesondere 100 bis 300 Litern. In einer besonders bevorzugten Ausführungsform werden diese Fässer übereinander fluchtend angeordnet, wobei bei Verwendung des Natrium/Schwefel-Redoxpaares das Natriumfass fluchtend über dem Schwefelfass angeordnet wird. Beide Fässer sind dabei elektrisch voneinander isoliert. Durch den Einbau eines verbindenden Elektrolyten, insbesondere einer leitenden Keramik, sind sie so modifiziert, dass sie als elektrochemische Zellen funktionieren.

Die beiden fluchtend übereinander angeordneten Fässer sind in ein gemeinsames Überfass (10) eingestellt. Zwischen den Wänden der beiden Innenfässern und des Außenfasses ist eine thermische Isolierung (11) eingebracht, so dass die Innenfässer auf der Betriebstemperatur von 300 °C ± 30 °C gehalten werden können, bei Umgebungstemperatur am Außenfass.

In einer bevorzugten Ausführungsform ist die erfindungsgemäße Energiespeichervorrichtung analog einem Fasslager aufgebaut. Optional können diese Fässer mit einem Tanklager kommunizieren.

Im System Natrium-Schwefel trennt der feste Elektrolyt E, insbesondere eine Natrium-Ionen leitende Keramik, die flüssigen Reaktanden. Mehrere Einzelzellen lassen sich zu Modulen zusammenfassen. Zur Optimierung der Leistung werden mehrere durch den Elektrolyten getrennte Zelleinheiten parallel geschaltet. Unabhängig von der Bauart werden die einzelnen Zellen, die jeweils eine Zellenspannung von rund 2 V vorweisen, in Reihen- oder Parallelschaltung miteinander verbunden. Das so eingestellte Spannungsniveau ergibt sich additiv aus den Spannungen der in Reihe verbunden Zellmodule. Die zugeführte Menge von Natrium und Schwefel, gegebenenfalls zusätzlich aus Vorratsbehältern, wird der Stromerzeugung angepasst. Dabei kann die Produktzuführung und Eduktabführung kontinuierlich bzw. diskontinuierlich erfolgen. Alkalimetall, Schwefel und Alkalimetallpolysulfid können gegebenenfalls in getrennten, geheizten Vorratsbehältern, insbesondere Tanks gelagert werden. Grundsätzlich ist jedoch auch eine Vermischung von Schwefel und Alkalimetallpolysulfid möglich. Erfindungsgemäß hat die Kraftwerkskapazität keine Begrenzung. Kraftwerksblöcke von > 1 MW, insbesondere 1 - 1.000 MW sind demnach ohne weiteres möglich. Die Spannung der Kraftwerkseinheit kann nach Umwandlung in Drehstrom in das Stromnetz eingespeist werden. Die Optimierung des elektrochemischen Reaktors strebt ein möglichst großes Oberflächen-Volumenverhältnis der Natrium-Ionen leitenden Keramik zu dem Volumen der Reaktanden an, so dass auch bei Großanlagen eine kompakte Bauart möglich ist und die Leistungsdichte pro Volumen möglichst hoch ist.

In einer bevorzugten Ausführungsform erfolgt die Zuführung und/oder Abführung des elektrischen Stroms zu den Elektroden und von den Elektroden weg über eine Mehrzahl von gleichmäßig über die Oberfläche der genannten Elektroden verteilten Punkte.

In einer bevorzugten Ausführungsform ist das flüssige Alkalimetall hochreines Natrium, vorzugsweise mit einem maximalen Gehalt an zweiwertigen Kationen kleiner als 3 ppm. In einer weiteren bevorzugten Ausführungsform ist das flüssige Nicht-Metall Schwefel. Die Zelle wird in einem bevorzugten Verfahren vorzugsweise dadurch betrieben, dass das flüssige Alkalimetall mit Hilfe eines mit Überdruck eingeführten Inertgases zirkuliert wird.

### Elektrische Anschlüsse und Isolierung

In einer besonderen Ausführungsform werden die Redox-Potential bildenden Stoffe für jede Spannungsstufe voneinander elektrisch isoliert im elektrochemischen Reaktor dezentral gelagert.

Da die elektrochemischen Reaktoren auf unterschiedlichen elektrischen Spannungsstufen stehen, muss die Leitungsführung und der Stofftransport so ausgeführt werden, dass elektrische Kurzschlüsse vermieden werden.

Dazu sind spezielle Vorrichtungen zur Potentialtrennung für den Stoffaustausch zwischen zentralen Tanks und den einzelnen elektrochemischen Reaktoren erforderlich.

### Stromdichte

Die auf die Oberfläche der Keramik bezogene Stromdichte beim Laden und Entladen des Speichers liegt zwischen 100 A/m² und 3000 A/m², bevorzugt bei 1000 A/m². Die Schwefelelektrode ist auf der Außenseite der Keramikrohre. Auf der Innenseite befindet sich die Natriumschmelze. Die Natriumschmelze im Inneren des Keramikrohres kommuniziert über ein Steigrohr (9) mit dem Inhalt des Natriumvorratsbehälters (4). Aus dem Vorratsbehälter läuft im Entladevorgang das Natrium hydrostatisch in die Keramik. Beim Laden drückt der elektrochemisch erzeugte Druck das Natrium zurück in den Vorratsbehälter.

Die elektrische Leistung des Systems wird von der nutzbaren Oberfläche der Natrium-Ionen leitenden Keramiken bestimmt.

Die Kapazität der Speichereinheit wird von der Masse des im Unterschuss vorhandenen Redoxpartners bestimmt. Um Leistung und Kapazität unabhängig voneinander variieren zu können, ist die erfindungsgemäße Vorrichtung im Baukastenprinzip aufgebaut. Der Baukasten ermöglicht, die Zahl der Keramikrohre pro Fasszelle zu variieren. In der erfindungsgemäßen Vorrichtung kann die Anzahl der in die Fasszelle eingebauten Keramikrohre in einem Bereich von 1 : 200 bevorzugt 1 : 10 variiert werden und damit auf die Anforderungen des Kunden angepasst werden.

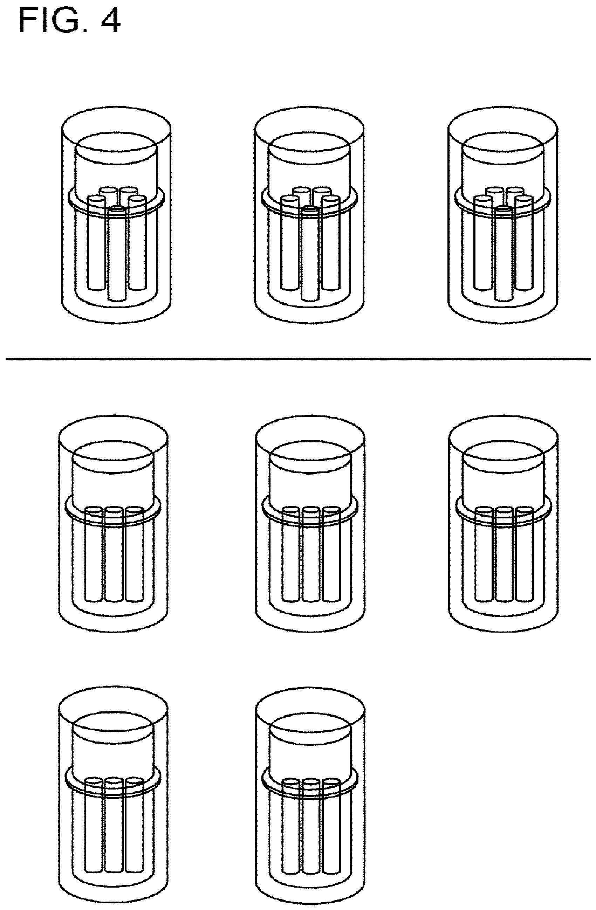

So bedingt die Anforderung eines längeren Lade- und Entladezyklus bei einer fixen Nennleistung, dass insgesamt mehr Redox-Chemikalien gelagert werden, also mehr Fässer eingesetzt werden. Die Anzahl der Keramikrohre pro Fasszelle wird um den gleichen Faktor vermindert, so dass die Anzahl der Keramikrohre für die Summe aller Fasszellen gleich bleibt. Zum Beispiel sind in Figur 4 im Basisfall insgesamt 15 Keramikrohre auf 3 Fässer verteilt. Die Forderung eines 1,66 fachen Leistungszyklus wird erfüllt, indem die 15 Keramikrohre auf 5 Fässer verteilt werden (Variante).

Die maximale Leistung eines Fasses ist durch die maximale Anzahl an Keramikrohren, die in einer Fasszelle untergebracht werden können, limitiert. Die Nennladungs- oder Nennentladungsperiode eines maximal bestückten Fasses dauert minimal 8 Stunden, bevorzugt 10 Stunden, maximal 20 Stunden.

Die in Serienfertigung hergestellten Fasszellen werden in einer bevorzugten Ausführung in einen Transportcontainer eingestellt und dort elektrisch in Reihenschaltung verbunden. Durch Aufstellung einer beliebigen Anzahl von Transportcontainern kann ein elektrochemisches Speicherkraftwerk beliebiger Leistung aufgebaut werden. Die Anbindung ans Stromnetz erfolgt mit Gleichrichtern und Wechselrichtern, die Stand der Technik sind.

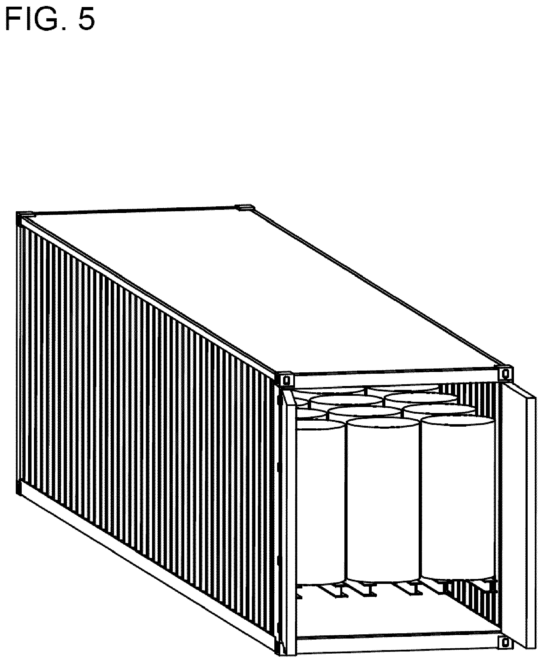

Beispielsweise werden in einen 40'-Seecontainer 43 Fasszellen eingestellt (siehe Figur 5). In diesem Beispiel hat ein Container eine Entladeleistung von 500 kW bei einer Speicherkapazität von 7,6 MWh, die entladen werden können. Beim Laden müssen dafür 9,5 MWh an elektrischer Arbeit aufgebracht werden. Der Nennlade- und Nennentladestrom beträgt 6400 A. Zum Laden muss eine Gleichspannung von 98 Volt pro Container über einen Netzgleichrichter bereitgestellt werden. Beim Entladen wird der Wechselrichter mit 80 Volt pro Container gespeist.

### Sicherheitsvorrichtungen

Erfindungsgemäß liegt der Elektrolyt E als Keramikrohr vor, über den auch die Natriumzufuhr erfolgt. Im Falle einer unerwünschten Entladung wird der entstehende Kurzschlussstrom dazu benutzt, eine Schmelzsicherung auszulösen, wodurch sowohl der Stromschluss als auch der Natriumfluss unterbrochen wird.

### Figuren

Besonders bevorzugten Ausführungsformen werden im Folgenden anhand der Figuren erläutert. Hierbei haben die verwendeten Bezugszeichen übereinstimmend folgende Bedeutung:
- 3: Stahlblechfass (oberes)
- 4: Natriumreservoir
- 5: Natrium (flüssig)
- 6: Inhalt des unteren Fasses (z.B. Schwefel / Natriumpolysulfid)
- 7: Ionen leitende Keramik
- 8: Fassdeckel
- 8b: Fassdeckelblech (unteres)
- 9: Steigrohr für Natrium
- 10: Überfass
- 11: Thermische Isolierung
- 12: Stromzuführung (Minusseite)
- 13: Schmelzsicherung
- 14: Sammelstromzuführung (Minusseite)
- 15: Stromzuführung (Plusseite)
- 16: Wärmetauscherrohr
- 17: Verdrängerkörper, Stromzuleitung
- 18: Sammelstromzuführung (Plusseite)
- 19: Dichtungsadapterring (unten)
- 20: Isolatorring (alpha-Al2O3)
- 21: Glasdichtung
- 22: Keramik-Metall-Verbindung (unten)
- 23: Keramik-Metall-Verbindung (oben)
- 24: Dichtungsadapterring (oben)
- 25: Schweißnaht (unten)
- 26: Schweißnaht (oben)
- 27: Isolierring
- A: Kühlmittel-Eintritt
- B: Kühlmittelaustritt

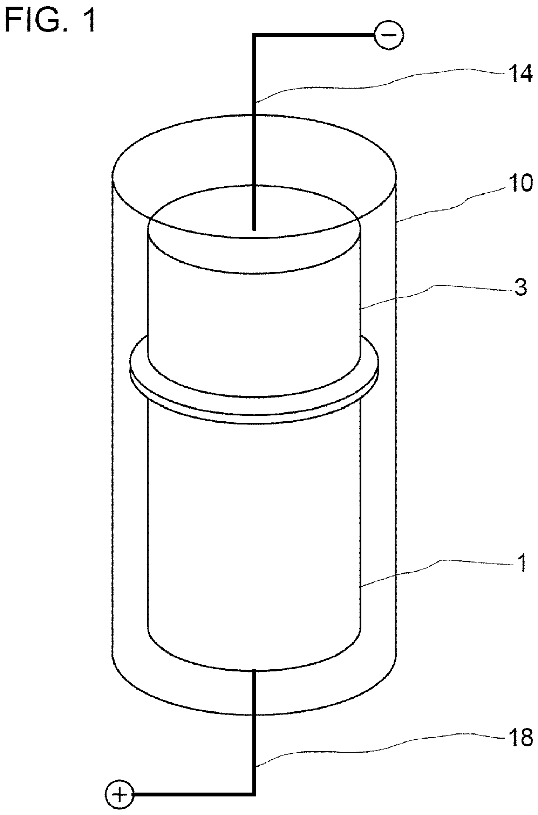

Figur 1 zeigt schematisch ein oberes Stahlblechfass (3) zur Aufnahme von Natrium und ein darunter fluchtend angeordnetes Fass (1) zur Aufnahme von Schwefel, wobei beide Fässer in ein gemeinsames Überfass (10) eingestellt sind.

Figur 2 zeigt den Grundkörper des unteren Fasses (1). Es ist ein Stahlblechfass mit einer eingestellten Innenverkleidung (2) aus einem Aluminummagnesiumblech, bevorzugt aus der Legierung Al-Mg-5083. Der Fassinhalt (6) ist beispielsweise Schwefel/Natriumpolysulfid oder Natriumchlorid/Schwermetallchlorid mit der Leitsalzschmelze NaAlCl₄. Der Fassdurchmesser ist minimal 150mm, maximal 1500mm, bevorzugt 600mm. Die Fasshöhe ist minimal 300mm, maximal 2500mm, bevorzugt 900mm.

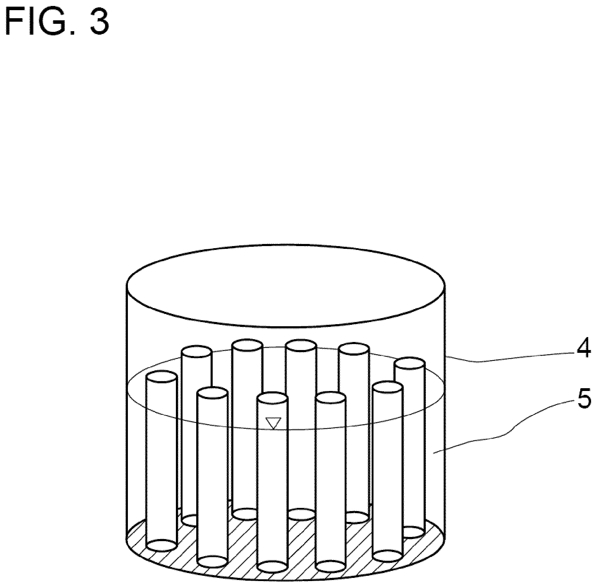

Der Grundkörper des oberen Fasses ist ein unten offenes Stahlblechfass (3) mit einem eingestellten unten geschlossenen und oben offenen Einsatz (4) aus Stahlblech, dem Natriumreservoir. Das Natriumreservoir ist mit Bodenlöchern und Rohreinsätzen so gestaltet, dass der Natriuminhalt (5) um die Rohreinsätze frei kommunizieren kann, ohne dass Natrium durch die Durchbrüche am Boden fließen kann (Figur 3). Der Raum über dem Natriumspiegel und im freien Kern der Rohreinsätze bleibt mit Inertgas (Stickstoff) gefüllt. Durch diese Rohreinsätze werden die Stromzuführungen (12) der Minusseite von oben nach unten zur Innenseite des Keramikrohres geführt. Die Inertgasfüllung isoliert diese Stromzuführungen elektrisch gegen das metallische Natriumreservoir.

Die Stromzuführung (12) dient in einer Doppelfunktion auch als Rohrleitung für den Natriumtransport zwischen der Innenseite der Keramik (7) und dem Natriumreservoir (4). Die Stromzuführung eines jeden einzelnen Keramikrohres ist über eine hohl gebohrte Schmelzsicherung (13) mit der Sammelstromzuführung der Minusseite (14) verbunden. Während des Betriebes werden beide Fassräume mit Inertgas (Stickstoff oder Argon) überdeckt. Der Druck auf der Natriumseite wird um 100 mm WS höher gehalten, als auf der Schwefelseite. Damit wird verhindert, dass bei defekten Keramiken Schwefeldämpfe in den Natriumraum strömen.

Figur 4 zeigt mögliche Verteilungsformen der als Keramikrohr vorliegenden Elektrolyte pro Fasszelle.

Figur 5 zeigt die mögliche Anordnung der erfindungsgemäßen Vorrichtung in Form eines Containers.

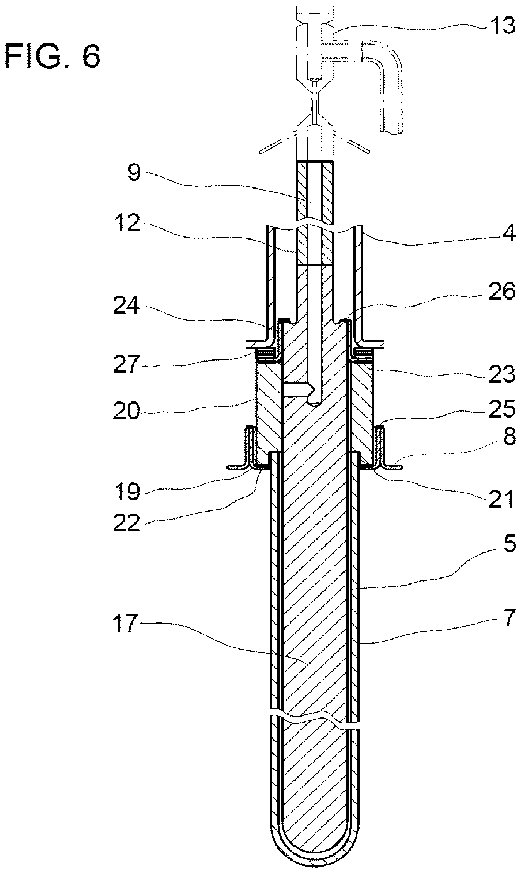

Figur 6 zeigt eine besondere Ausgestaltung des in Form einer Keramik vorliegenden Elektrolyten E: Am oberen, offenen Ende der Keramik (7) ist ein keramischer Isolatorring (20) mit Glas so angelötet, dass eine hermetisch dichte Verbindung besteht. Dieser elektrisch isolierende Isolatorring, bevorzugt aus Alpha-Al₂O₃, ist an seiner Unterseite mit einem Dichtungsadapterring (19), bevorzugt aus einer Aluminiumlegierung, mittels einer Keramik-Metallverbindung (22) hermetisch dicht verbunden. Die Keramik-Metallverbindung (22) wird vorzugsweise durch Diffusionsschweißen, besonders bevorzugt Ultraschallschweißen hergestellt. Der Dichtungsadapterring (19) wird an seinem freien Ende in den Fassdeckel des unteren Fasses eingeschweißt.

Auf der Oberseite des keramischen Isolatorringes (20) ist ein zweiter Dichtungsadapterring (24), bevorzugt aus einer Aluminiumlegierung, mittels einer Keramik-Metallverbindung (23) hermetisch dicht verbunden. Dieser Dichtungsadapterring (24) ist mit dem Verdrängerkörper der auch als Stromzuführung (17) wirkt verschweißt, so dass der Innenraum der Keramik einen abgeschlossenen Raum bildet. Dieser Innenraum ist mit dem darüber liegenden Natriumreservoir (4) über eine Bohrung (9) in der Stromzuführung (12), die spezielle Schmelzsicherung (13) und dem Tauchröhrchen verbunden. Das Natriumreservoir (4) sitzt auf vielen Isolierringen (27) auf, die vom oberen Dichtungsadapterring (24) zentriert und gestützt werden.

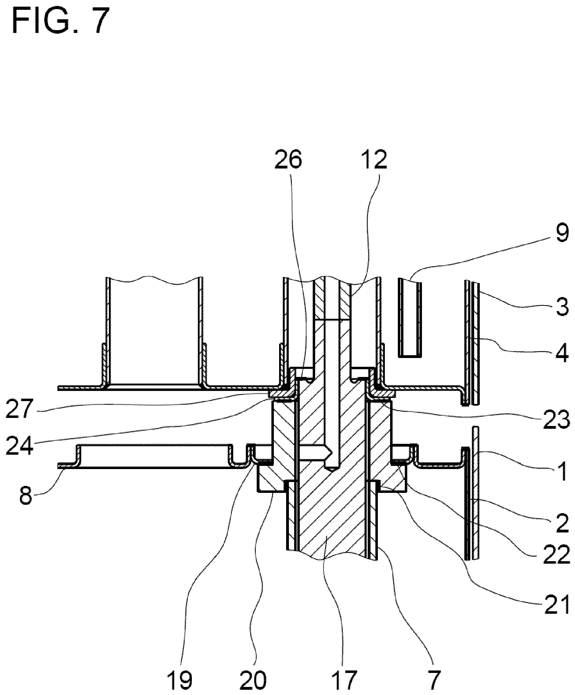

Eine im Hinblick auf die Serienfertigung verbesserte Variante des Einbaus der Keramik ist in Figur 7 gezeigt. Hier ist der keramische Isolatorring (20) so modifiziert, dass die beiden Keramik-Metallverbindungen (22), (23) von oben gefertigt werden können.

Eine weitere im Hinblick auf die Serienfertigung, Einbau und mechanische Stabilität verbesserte Variante des Einbaus der Keramik ist in Figur 8 gezeigt. Hier ist der keramische Isolatorring (20) so modifiziert, dass die beiden Keramik-Metallverbindungen (22), (23) von oben gefertigt werden können. Außerdem wird der Fassdeckel durch zwei Bleche (8) (8b) gebildet, wodurch die untere Keramik-Metallverbindung (22) und die Einschweißung (25) des unteren Dichtungsadapterrings (20) mechanisch entlastet werden. Die Montage wird dadurch erleichtert, dass das untere Fassdeckelblech (8b) den Einbau der Keramik schon vor der Schweißung trägt.

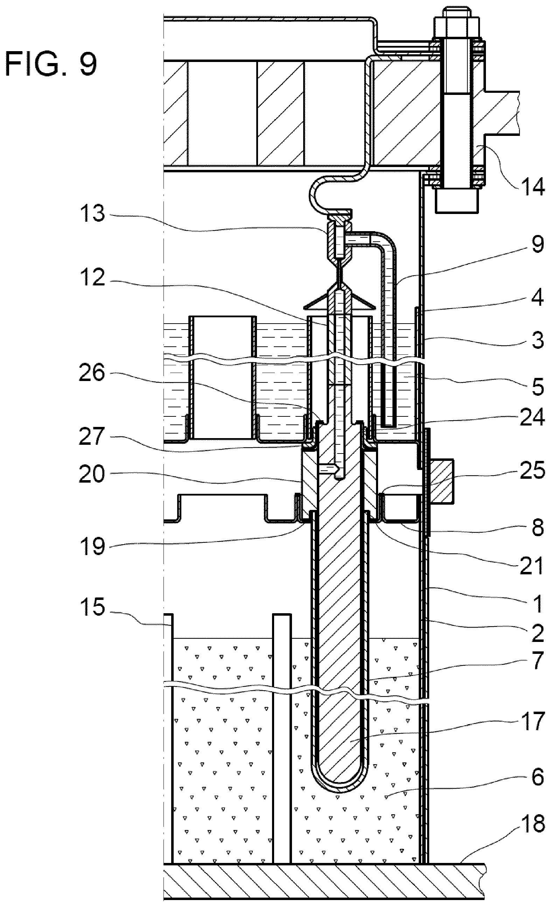

Figur 9 zeigt den Einbau der Keramik und das komplette System als Zusammenbauzeichnung.

### Nutzung entwickelter Wärme

Die Verlustwärme, die beim Laden oder Entladen des Energiespeichers entsteht, würde zu einer Erwärmung der Zelle führen. Die erfindungsgemäße Vorrichtung enthält deshalb Wärmetauscherrohre (16), über die mittels eines Wärmeträgers wie zum Beispiel Wärmeträgeröl die Verlustwärme abgeführt wird. Die Betriebstemperatur von 300°C lässt einen Spielraum für eine weitere energetische Nutzung, sei es zur Heizung zur Kühlung oder zum Betrieb von Kraftmaschinen.

Die hier beschriebene Ausführungsform, der Funktionsintegration von Stromzuführung (12) und Natriumtransport (9) begegnet der unerwünschten Entladung des Energiespeichers bei dem Versagen einer einzelnen Keramik. In diesem Fall tritt in der betroffenen Stromzuführung ein Kurzschlussstrom auf, der zum Ansprechen der Schmelzsicherung (13) führt, wodurch der Stromfluss und auch der Natriumfluss unterbrochen werden. Somit kann das Speichersystem auch nach dem Ausfall einzelner Funktionseinheiten weiter betrieben werden.

In einer besonders bevorzugten Ausführungsform ist in wenigstens einem Behälter BA oder BS ein Verdrängerkörper enthalten, der die Masse des jeweiligen Reaktanden in dem Volumen reduziert. Eine derartige Ausführungsform kann als zusätzliche Sicherheitsvorrichtung dienen.

### Beispiele

### Beispiel 1

### A) Apparatur

Es wurde die in Figur 2 gezeigte Apparatur verwendet. Das untere mit einer Innenverkleidung (2) ausgestattete Stahlblechfass (1) hatte einen Nenninhalt von 200 Litern mit D=580mm und H=860mm. Das über dem unteren Stahlblechfass angeordnete Natriumreservoir (4) hatte die Maße D=580mm und H=400. In das untere Stahlblechfass (1) (2) tauchten 121 Stück unten geschlossene keramische Rohre, aus beta"-Al2O3 ein. Die Keramikrohre hatten die Abmessungen Da= 24mm, Di= 20mm, L=820mm.

Das Natrium, insgesamt 83 Liter, war in den Rohren und im Natriumreservoir. Der Schwefel mit einem Nettovolumen von 145 Litern war im unteren Fasskörper und umspülte die Rohre. Jedes Keramikrohr hatte eine innen liegende minusgepolte Stromzuführung (12). Diese Stromzuführungen wurden mit Schmelzsicherungen gegen Kurzschluss gesichert und oben auf eine gemeinsame Sammelschiene (14) geführt. Die plusgepolten Stromzuführungen (15) waren zwischen den Keramikrohren angeordnet und kontaktierten das Grafitvlies, das um die Keramikrohre fixiert war. Jedes Keramikrohr bildete mit den beiden Redoxpartnern innen und außen, dem Grafitvlies und den Stromzuführungen eine elektrochemische Elementarzelle.

Alle Elementarzellen einer Fasszelle waren elektrisch parallel geschaltet. Sie waren damit auf gleichem Potential. Die Stromstärken aller Elementarzellen addierten sich zum Gesamtstrom der Fasszelle. Es wurde ein 4 Quadranten Thyristorgleichrichter/ Wechselrichter (15000 A, 3 Volt) eingesetzt, der das gesteuerte Entladen und Laden der Fasszelle ermöglichte. Der elektrische Anschluss wurde mit Aluminiumschienen ausgeführt.

Die Oberfläche des Keramikrohres auf der Innenseite errechnet sich zu 0,0515 m². Mit 121 Rohren hatte das gesamte Fass 6,23 m² Elektrodenfläche.

### B) Vorbereitung

Vor der Befüllung mit flüssigem Natrium und flüssigem Schwefel wurden die beiden inneren Fässer der Apparatur auf 290°C aufgeheizt. Die Temperatur wurde mit ± 10K gehalten, indem der Wärmeträgerkreislauf in den Wärmetauscherrohren (16) auf die entsprechende Temperatur geregelt wurde.

### C) Laden/Entladen

Im automatisierten Betrieb wurde die Zelle 1000 Lade/ Entladezyklen ausgesetzt, 10 Stunden entladen und 10 Stunden laden. Dabei wurde jeweils mit 11,6 kW entladen und mit 14,3 kW geladen. Die Stromstärke war ± 6230 A.

### Beispiel 2:

### A) Apparatur

Es wurden 43 Stück von den in Beispiel 1 beschriebenen Fasszellen in einen 40'-Seetransportcontainer eingesetzt. Die Fasszellen wurden in elektrischer Reihenschaltung mit Aluminiumschienen verbunden. Dadurch erhöhte sich die Leerlaufspannung auf 89,4 Volt. Es wurde ein 4 Quadranten Thyristorgleichrichter/ Wechselrichter (10000 A, 120 Volt) eingesetzt, der das gesteuerte Entladen und Laden der Fasszelle ermöglichte. Der elektrische Anschluss wurde mit Aluminiumschienen ausgeführt.

### B) Vorbereitung

Vor der Befüllung mit flüssigem Natrium und flüssigem Schwefel wurden alle 43 Fasszellen auf 290°C aufgeheizt. Die Temperatur wurde mit ± 10K gehalten, indem der Wärmeträgerkreislauf in den Wärmetauscherrohren (16) auf die entsprechende Temperatur geregelt wurde.

### C) Laden/Entladen

Im automatisierten Betrieb wurde der Zellenverbund 1000 Lade/ Entladezyklen ausgesetzt. Dabei wurde jeweils über 10 Stunden entladen und dann über 10 Stunden geladen. Die Entladeleistung war 0,5 MW. Geladen wurde mit 0,613 MW. Die Stromstärke war ± 6230 A.

## Patentansprüche

1. Vorrichtung zur Speicherung elektrischer Energie mittels der Stoffe A und S, die ein Redoxpaar bilden und voneinander getrennt vorliegen, wobei
a) die Vorrichtung die Stoffe A und S enthält, wobei der Stoff A ein Alkalimetall und der Stoff S Schwefel ist,
b) die Stoffe A und S getrennt voneinander jeweils in einem Behälter BA und BS enthalten sind, welche übereinander angeordnet sind,
c) wobei die Behälter BA und BS mittels eines Festelektrolyten E verbunden sind, der für Kationen durchlässig ist,
d) wobei die Behälter BA und BS in einem Überbehälter enthalten sind,
wobei das Alkalimetall als Schmelze vorliegt und im Innern von mindestens einem, unten geschlossenen und aus dem Elektrolyten E gebildeten Keramikrohr gehalten wird, und das Innere jedes Keramikrohrs jeweils über ein Steigrohr mit dem darüber liegenden Inhalt des Alkalimetallbehälters kommuniziert, **dadurch gekennzeichnet, dass** die Vorrichtung wenigstens zwei Überbehälter enthaltend Behälter BA und BS verbunden mittels eines Festelektrolyten E enthält und dass das Steigrohr von oben in das Alkalimetall im Behälter BA eintaucht.

2. Vorrichtung nach Anspruch 1, **dadurch gekennzeichnet, dass** die Behälter BA und BS fluchtend übereinander als Fasspaar angeordnet sind.

3. Vorrichtung nach Anspruch 1 oder 2, **dadurch gekennzeichnet, dass** das Alkalimetall Natrium ist.

4. Vorrichtung nach einem der Ansprüche 1 bis 3, **dadurch gekennzeichnet, dass** der Elektrolyt E aus einer Keramik oder Kationen-leitenden Gläsern besteht.

5. Vorrichtung nach Anspruch 4, **dadurch gekennzeichnet, dass** die Keramik gegebenenfalls stabilisiertes β-Aluminiumoxid oder β" Aluminiumoxid ist.

6. Vorrichtung nach einem der Ansprüche 1 bis 5, **dadurch gekennzeichnet, dass** wenigstens zwei der Überbehälter in einem Transportcontainer eingestellt sind, wobei die elektrischen Pole in Reihenschaltung verbunden sind.

7. Vorrichtung nach einem der Ansprüche 1 bis 6, **dadurch gekennzeichnet, dass** der Behälter BS ein Stahlblechfass ist, welches eine Innenverkleidung aus einer Aluminiummagnesiumlegierung aufweist.

8. Vorrichtung nach einem der Ansprüche 1 bis 7, **dadurch gekennzeichnet, dass** die Vorrichtung ein Anodenabteil A für die Aufnahme von flüssigem Alkalimetall, ein Kathodenabteil K für die Aufnahme von flüssigem Schwefel umfasst, das Anodenabteil A und das Kathodenabteil K durch den Festelektrolyten E getrennt sind, der bei der Betriebstemperatur der Zelle für durch Oxidation des Alkalimetalls gebildete Kationen durchlässig ist, und die Vorrichtung weiterhin Elektroden umfasst für den Schluss eines äußeren Stromkreises für den durch die Umsetzung des Alkalimetalls mit dem Schwefel erzeugten elektrischen Strom, wobei die Schwefelelektrode von einem mit Schwefel/Natriumpolysulfid getränkten Kohlenstoffflächengebilde gebildet wird und die Kohlenstoffelektroden konzentrisch um die keramischen Elektrolytrohre angeordnet sind.

9. Verfahren zur Speicherung und zur Abgabe und gegebenenfalls zum Transport elektrischer Energie unter Verwendung eines elektrochemischen Reaktors, **dadurch gekennzeichnet, dass** eine Vorrichtung gemäß einem der vorhergehenden Ansprüche verwendet wird.

10. Verfahren nach Anspruch 9, **dadurch gekennzeichnet, dass** eine Vorrichtung verwendet wird, bei der die Verbindung der Behälter BA und BS mittels des Feststoffelektrolyten E einfach oder mehrfach erfolgen kann und ihre Anzahl variierbar ist, um eine Anpassung von Leistung und Kapazität zu ermöglichen.

11. Verfahren nach Anspruch 9 oder 10, **dadurch gekennzeichnet, dass** als Stoff A eine Schmelze eines Alkalimetalls und als Stoff S eine Schwefelschmelze verwendet wird.

12. Verfahren nach Anspruch 9, **dadurch gekennzeichnet, dass** die Natriumschmelze während der elektrochemischen Reaktion durch das hydrostatische Gefälle oder das elektrochemisch erzeugte Druckgefälle bewegt wird.

13. Verfahren nach einem der Ansprüche 9 bis 12, **dadurch gekennzeichnet, dass** das Verfahren bei einer Temperatur von wenigstens 250 °C durchgeführt wird.

14. Verfahren nach Anspruch 9, **dadurch gekennzeichnet, dass** der Behälter BA durch Verwendung von Bodenlöchern und Rohreinsätzen so gestaltet ist, dass das flüssige Natrium um die Rohreinsätze frei kommunizieren kann, aber innerhalb der Rohreinsätze freier Raum für die Durchführung von Stromzuführungen und Natriumsteigrohre bleibt.

15. Verfahren nach einem der Ansprüche 9 bis 14, **dadurch gekennzeichnet, dass** in wenigstens einem der Behälter BA oder BS die Masse des Reaktanden durch Verwendung eines Verdrängerkörpers reduziert wird.

## Claims

1. An apparatus for the storage of electric energy by means of materials A and S which form a redox pair and are present separately from one another, where
a) the apparatus comprises the materials A and S, where the material A is an alkali metal and the material S is sulfur,
b) the materials A and S are each comprised separately from one another in containers BA and BS which are arranged above one another,
c) where the containers BA and BS are joined by means of a solid electrolyte E which is permeable to cations and
d) where the containers BA and BS are comprised in an overall container, where the alkali metal is present as a melt and is kept in the interior of at least one ceramic tube which is made of the electrolyte E and is closed at the bottom and the interior of each ceramic tube communicates in each case via a riser tube with the content of the alkali metal container above, wherein the apparatus comprises at least two overall containers comprising containers BA and BS joined by means of a solid electrolyte E and the riser tube dips from above into the alkali metal in the container BA.

2. The apparatus according to claim 1, wherein the containers BA and BS are arranged flush above one another as a drum pair.

3. The apparatus according to claim 1 or 2, wherein the alkali metal is sodium.

4. The apparatus according to any of claims 1 to 3, wherein the electrolyte E consists of a ceramic or cation-conducting glass.

5. The apparatus according to claim 4, wherein the ceramic is optionally stabilized β-aluminum oxide or β"-aluminum oxide.

6. The apparatus according to any of claims 1 to 5, wherein at least two of the overall containers are installed in a transport container, with the electric poles being connected in series.

7. The apparatus according to any of claims 1 to 6, wherein the container BS is a steel drum which has interior lining of an aluminum-magnesium alloy.

8. The apparatus according to any of claims 1 to 7, wherein the apparatus has an anode compartment A for accommodating liquid alkali metal, a cathode compartment K for accommodating liquid sulfur, the anode compartment A and the cathode compartment K are separated by the solid electrolyte E which at the operating temperature of the cell is permeable to cations formed by oxidation of the alkali metal and the apparatus further comprises electrodes for closing an external electric circuit for the electric current generated by the reaction of the alkali metal with the sulfur, where the sulfur electrode is formed by a sheet-like carbon structure impregnated with sulfur/sodium polysulfide and the carbon electrodes are arranged concentrically around the ceramic electrolyte tubes.

9. A process for the storage and release and optionally for the transport, of electric energy using an electrochemical reactor, wherein an apparatus according to any of the preceding claims is used.

10. The process according to claim 9, wherein an apparatus in which the containers BA and BS can be connected singly or multiply by means of the solid electrolyte E and the number thereof is variable to allow adaptation of power output and capacity.

11. The process according to claim 9 or 10, wherein a melt of an alkali metal is used as material A and a sulfur melt is used as material S.

12. The process according to claim 9, wherein the sodium melt is moved during the electrochemical reaction by means of the hydrostatic gradient or the electrochemically generated pressure gradient.

13. The process according to any of claims 9 to 12, wherein the process is carried out at a temperature of at least 250°C.

14. The process according to claim 9, wherein the container BA is configured by use of holes in the bottom and tube inserts so that the liquid sodium can communicate freely around the tube inserts but free space for conducting through power inlet leads and sodium riser tubes remains within the tube inserts.

15. The process according to any of claims 9 to 14, wherein the mass of the reactants is reduced in at least one of the containers BA and BS by use of a displacement body.

## Revendications

1. Ensemble d'accumulation d'énergie électrique au moyen de substances A et S qui forment une paire redox et sont séparées l'une de l'autre, dans lequel
a) l'ensemble contient les substances A et S, la substance A étant un métal alcalin et la substance S le soufre,
b) les substances A et S sont disposées séparément l'une de l'autre dans des récipients respectifs BA et BS disposés l'un au-dessus de l'autre,
c) les récipients BA et BS étant reliés au moyen d'un électrolyte solide E perméable aux cations,
d) les récipients BA et BS étant contenus dans un récipient supplémentaire,
le métal alcalin étant présent sous forme de bain fondu et étant maintenu à l'intérieur d'au moins un tube en céramique fermé dans le bas et formé de l'électrolyte E, l'intérieur de chaque tube en céramique communiquant par un tube montant avec le contenu du récipient à métal alcalin situé au-dessus, **caractérisé en ce que**
l'ensemble contient au moins deux récipients supplémentaires contenant le récipient BA et le récipient BS reliés au moyen d'un électrolyte solide E et
**en ce que** le tube montant s'enfonce par le haut dans le métal alcalin présent dans le récipient BA.

2. Ensemble selon la revendication 1, **caractérisé en ce que** les récipients BA et BS sont alignés l'un au-dessus de l'autre en formant une paire de fûts.

3. Ensemble selon les revendications 1 ou 2, **caractérisé en ce que** le métal alcalin est le sodium.

4. Ensemble selon l'une des revendications 1 à 3, **caractérisé en ce que** l'électrolyte E est constitué d'une céramique ou de verres conduisant les cations.

5. Ensemble selon la revendication 4, **caractérisé en ce que** la céramique est un oxyde d'aluminium β ou un oxyde d'aluminium β", éventuellement stabilisés.

6. Ensemble selon l'une des revendications 1 à 5, **caractérisé en ce qu'**au moins deux des récipients supplémentaires sont placés dans un conteneur de transport, les pôles électriques étant raccordé en série.

7. Ensemble selon l'une des revendications 1 à 6, **caractérisé en ce que** le récipient BS est un fût en tôle d'acier qui présente un revêtement intérieur en alliage d'aluminium et de magnésium.

8. Ensemble selon l'une des revendications 1 à 7, **caractérisé en ce que** l'ensemble présente un compartiment A d'anode qui reprend un métal alcalin liquide, un compartiment K de cathode qui reprend du soufre liquide, **en ce que** le compartiment d'anode A et le compartiment de cathode K sont séparés par l'électrolyte solide E qui est perméable aux cations formés à température de fonctionnement de la cellule par oxydation du métal alcalin, l'ensemble comprenant en outre des électrodes permettant le raccordement à un circuit extérieur de courant pour le courant électrique formé par la réaction du métal alcalin avec le soufre, l'électrode de soufre étant formée d'un tissu plat de carbone imprégné de polysulfure de soufre/sodium et les électrodes de carbone étant disposées concentriquement autour du tube d'électrolyte en céramique.

9. Procédé d'accumulation et de fourniture ainsi qu'éventuellement de transport d'énergie électrique par recours à un réacteur électrochimique, **caractérisé en ce qu'**il utilise un ensemble selon l'une des revendications précédentes.

10. Procédé selon la revendication 9, **caractérisé en ce qu'**il utilise un ensemble dans lequel la liaison des récipients BA et BS au moyen de l'électrolyte solide E peut s'effectuer une ou plusieurs fois et dont le nombre peut varier pour permettre une adaptation en puissance et capacité.

11. Procédé selon les revendications 9 ou 10, **caractérisé en ce qu'**il utilise comme substance A un métal alcalin fondu et comme substance S du soufre fondu.

12. Procédé selon la revendication 9, **caractérisé en ce que** pendant la réaction électrochimique, le sodium fondu est déplacé par le gradient hydrostatique ou le gradient de pression d'origine électrochimique.

13. Procédé selon l'une des revendications 9 à 12, **caractérisé en ce que** le procédé est mis en oeuvre à une température d'au moins 250°C.

14. Procédé selon la revendication 9, **caractérisé en ce que** par recours à des trous de fond et de garniture tubulaire, le récipient BA est configuré de telle sorte que le sodium liquide puisse communiquer librement autour des garnitures tubulaires mais qu'il reste à l'intérieur des garnitures tubulaires un espace libre permettant le passage d'amenée de courant et de tube de montée de sodium.

15. Procédé selon l'une des revendications 9 à 14, **caractérisé en ce que** la masse des réactifs est réduite à l'intérieur d'au moins l'un des récipients BA ou BS par recours à un corps de refoulement.
